# EUROPEAN PATENT APPLICATION

(11) **EP 0 970 933 A2**
(43) Date of publication of application: **12.01.2000**
(21) Application number: 99304490.8
(22) Date of filing: 09.06.1999
(51) Int. Cl.: C05F 9/00

(54) **Slow release matrix bound fertilisers**

(30) Priority: 09.06.1998 GB 9812310
(71) Applicant: Ureka Ltd. (formerly Brycliff Ltd.), St. Albans, Herts AL1 1NG (GB)
(72) Inventor: Alderson, Philip, Milton Keynes, MK13 7ND (GB); Arcibald, Gordon, Tonbridge, Kent, TN10 3DG (GB); Beckwith, David, Radlett, Herts, WD7 8AV (GB); Treacy, Kevin, Malahide, Co. Dublin, Eire (GB)

(57) **Abstract**

The invention concerns a unique process for the production of generic fertilisers with chemical and organic benefits and characteristics. The invention relates to the recycling of any organic waste material for use as a binding matrix in the production of fertilisers; for use as a source of energy, as electricity, steam or heat, for the production of fertilisers; and for the introduction of organic degradable material as a constituent element of chemically rich fertilisers.

## Description

The invention concerns a unique process for the production of generic fertilisers with chemical and organic benefits and characteristics. The invention relates to the recycling of any organic waste material for use as a binding matrix in the production of fertilisers; for use as a source of energy, as electricity, steam or heat, for the production of fertilisers; and for the introduction of organic degradable material as a constituent element of chemically rich fertilisers.

### Background to the Invention

The treatment and disposal of organic waste material, particularly that contained in Municipal Solid Waste (MSW), represents a growing problem in developed countries. A high proportion of this waste stream is currently landfilled, a growing proportion is incinerated and at present a small proportion is recycled. A growing awareness of the inherent dangers in pursuing current policies has prompted many Governments Agencies to seek to promote alternatives which provide longer term environmentally friendly solutions.

The International Environmental Conference held in Kyoto, Japan, highlighted many of the disadvantages of current methods being used to deal with MSW and organic waste disposal, particularly in relation to the production of 'greenhouse gases' which result. Marked progress has been made in recent years in the removal and recycling of non-biodegradable materials and of metals and inert materials from MSW streams. Many areas remove plastics, paper, metals, glass and other materials from the waste stream and successfully recycle these. The recovery, recycling and reuse of organic materials from the waste stream is limited due to the perceived low value of the commodity and the difficulties associated with finding an acceptable end product.

Many areas actively promote composting as a method of dealing with this waste, but this is not without problems. Composting is a time consuming process, even where accelerated methods are used in large scale plants, and is a destructive process. Difficulties can arise related to the value of the product; as appreciable levels of nitrogen are lost in the process, acceleration requires the use of power, and the material produced can contain weed seeds, microbial organisms and pathogens which can be detrimental to extensive use in crop cultivation.

Attempts by others have been made using different methods to produce organic fertilisers from organic waste streams, in particular from sewage sludge and animal manures. These have involved taking an essentially dry waste material and treating it with ammonia to raise the pH to a high level, typically 11,6. The pH of the resultant mixture is reduced to 7,0 by the addition of an inorganic acid, with the resulting paste dried naturally. Additional nutrients would be added to this dry material at a later stage, in a manner similar to standard blending processes for chemical fertilisers.

By contrast this invention makes use of forced drying of the product as an inherent step in the process and all required nutrients are added to a wet medium during the process.

Previous proposals held that contamination, in the form of pieces of plastics, metals, textiles and the like, of the organic waste are removed from the waste stream prior to the start of the treatment process. Failure to remove these elements at this stage would result in the contaminants being carried through to the final product This invention removes contaminants and impurities during the wet stage of the process.

The standard method of producing chemical compound fertilisers involves the dry mixing of Nitrogen (N), Phosphorous (P) and Potassium (K) compounds in a blending process. The classification of N:P:K fertilisers is based on the proportions of N, P₂O₅ and K₂O contained in the compound. The Applicant believes that this invention differs significantly from previous proposals in many key respects, including the use of a wet process from the outset rather than dry, to such an extent that the process is unique.

### Summary of the Invention

The Invention describes the background and method of producing a compound fertiliser where the chemically active ingredients are bound into an organic matrix which acts as the principal carrier and adds novel beneficial characteristics to the product. The product of the process is unique. The process comprises a number of distinct steps which are summarised as follows.
a) Tramp material, defined as unwanted parts such as plastics, metals, glass, textiles, timber, stone, brick, soil or other inert materials, can largely be separated out from the main waste stream as part of the process or as a separate pre-treatment stage as required. The commencement point of the process is considered as an organic-rich (waste) stream. The organic-rich stream is formed into a slurry by the addition of water and activation of the mix to provide an aqueous slurry with a homogenous consistency.
b) This aqueous slurry solution is screened to remove suspended particulate tramp material not acceptable in the end product.
c) The screened and filtered aqueous slurry is thickened to reduce the water content to an acceptable level which is interdependent on the final formulation of the product required. This thickened slurry provides the basic medium for the chemical processes which follow for the production of the fertiliser compounds which can be produced from the process.
d) Inorganic acid is added to the slurry. This reacts with the organics to sterilise the slurry. Ammonium solution is added to neutralise the acid concentration by chemical reaction. The addition of these chemicals, resulting in rapid changes in pH and the resultant temperature rises, has the effect of destroying seeds, microbial organisms, and pathogenic materials contained in the slurry. Phosphate and potassium compounds can be added if required to produce the balance of Nitrogen, Phosphorous and Potassium required in the final product Where elevated levels of phosphorous and potassium are not required in the final product the phosphate and potassium compounds can be omitted and the process is produces a nitrogen rich compost-like product.
e) Variations in the final constituent parts of Nitrogen, Phosphorous and Potassium in the product are controlled by a combination of the concentrations of the acid and alkali (base) compounds added and by the chemical formulation of the individual compounds used. The process allows for considerable variation in the amounts and composition of the chemical compounds which can be used within the same overall process.
f) The resulting paste is granulated, force-dried using steam, and screened to produce a product which is of consistent size and composition.

This describes the basic fertiliser process which has been successfully tested in practice.

The process described can be used to process a wide variety of organic-rich feedstock streams. Any putrescible organic material can be used as feedstock, and the digestate output from the anaerobic digestive treatment of organics is particularly applicable. The digestion process not only provides the organic feedstock, but also the off-gas from the digestion process can be used to generate the heat and power required to produce the fertiliser.

The process produces a unique fertiliser compound which combines the chemically active ingredients of conventional chemical fertilisers bound together into a stable compound by the organic matrix which acts to replace the mineral filler in conventional chemical fertilisers. This binding of the chemicals into the organic matrix takes place during the chemical reactions which occur using the organic slurry as the reactive medium, and during the mixing process which forms part of the chemical reaction control.

The Applicant maintains that the process proposal is in marked contrast to the methods of production used for conventional compound chemical fertilisers, which are produced by dry-mixing the constituent Nitrogen, Phosphorous and Potassium compounds in proportions required to give the N:P:K ratio sought. There is no chemical reaction between these chemical compounds, which are inherently stable in their own right. The balance of the fertiliser product is made up with an inert additive which may or may not act as a binder.

The Applicant believes that the resulting product, which can be granulated for use in a manner similar to its chemically produced equivalent products, is stable and can be stored for extended periods without deterioration, and provides a slow-release mechanism for the release of the chemical nutrients into the ground. This is a key difference with conventional chemical fertilisers available, which do not have similar slow-release properties. The product is believed to be robust, exhibiting little or no degradation during handling by conventional handling systems. The product is sterile and has been shown to contain no weed seeds, microbial organisms, pathogens or harmful concentrations of contaminant heavy metals. As the product is sterile, release of the nutrients is effected by microbes in the soil following use. The Applicant believes that the product is unique.

The principal innovative step of the invention revolves around the liquefaction, screening and hydration of the organic waste material to form a homogenous slurry at the start of the process. This slurry subsequently forms the principal medium within which all chemical reactions take place, and to which all physical treatments are applied. Control of the moisture content of the slurry at various stages throughout the process is used to aid the formulation and granulation of the final product.

At the final stages milling and screening of the product can be used to ensure the production of product with a uniform granular size range, and a uniform and consistent moisture content. Oversized and undersized granules can be milled and recirculated during this stage to ensure that consistency of granular size is achieved. This recirculation of fine powder further promotes the formation of granules as required.

The final drying of the product is carried out using high pressure steam, which can be produced as a by-product of part of the process. Conventional chemical fertiliser production processes require the addition of energy in the form of electricity and heat or steam. The processes do not produce these requirements, which are provided from external power and energy sources. The current proposals allow for variations and/or additions to the basic process to utilise the by-product of process stages to provide energy and heat or steam in the formulation of the products.

These requirements are provided by the inclusion of anaerobic digestion The Applicant believes that the digestate output from the anaerobic digestive treatment of organics is particularly applicable to the invention process. The main principles of anaerobic digestion are accepted as being in the public domain, and therefore are prior art. The linking of anaerobic digestion into a process for the production of fertilisers is claimed as being an innovative step in the current proposals. The organic output from Aerobic treatment is also a viable feedstock.

The term "Anaerobic" is defined as meaning "In the absence of Oxygen". The process of anaerobic digestion involves the degradation of biological materials in the absence of oxygen. This process method is used for the treatment of organic waste materials such as sewage sludge, and, more recently, is being extended to encompass the treatment of the organic fraction of MSW. The purpose of the process as currently utilised is to reduce the mass of the biological solids, with the principal product being hydrocarbon gases (for example, methane) which can be drawn off and used for power and energy production.

The final digestate, being the reduced mass of the digested biological solids, are a by-product of the process, and are not subject to further refinement for the purposes of recovery. The final digestate is considered a waste by-product Digestion is continued for as long as is required to draw off to maximum volumes of hydrocarbon gases balanced against to requirement to reduce the organic mass as much as is practicable.

This invention utilises the anaerobic digestion process for the production of hydrocarbon gases, but the digestate forms feedstock material for the slurry medium for the formulation of the new fertiliser product The amounts of gas drawn off are balanced against the amount of slurry which is required for the production of the new fertiliser product, and the requirement of the organic fraction to function as a binder for the chemical additives.

The Applicant believes that the digestion process as a part of this invention need not be carried through to the same stage of completion as utilised elsewhere where gas is the main product.

The off-gas from the anaerobic digestion process can be fed to a thermal energy process, which can be a gas incinerator, diesel or similar engine, or a gas turbine. This is used to raise steam and/or electricity for use in the manufacturing process.

### Overall Process Links

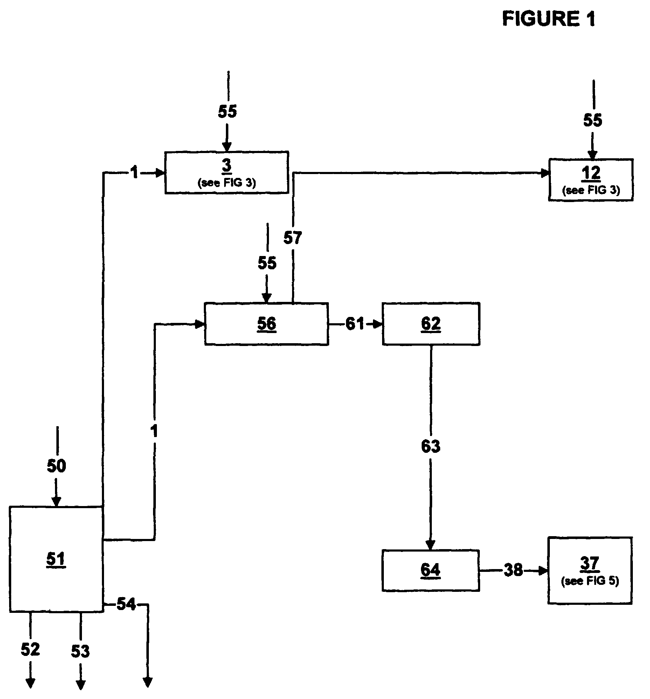

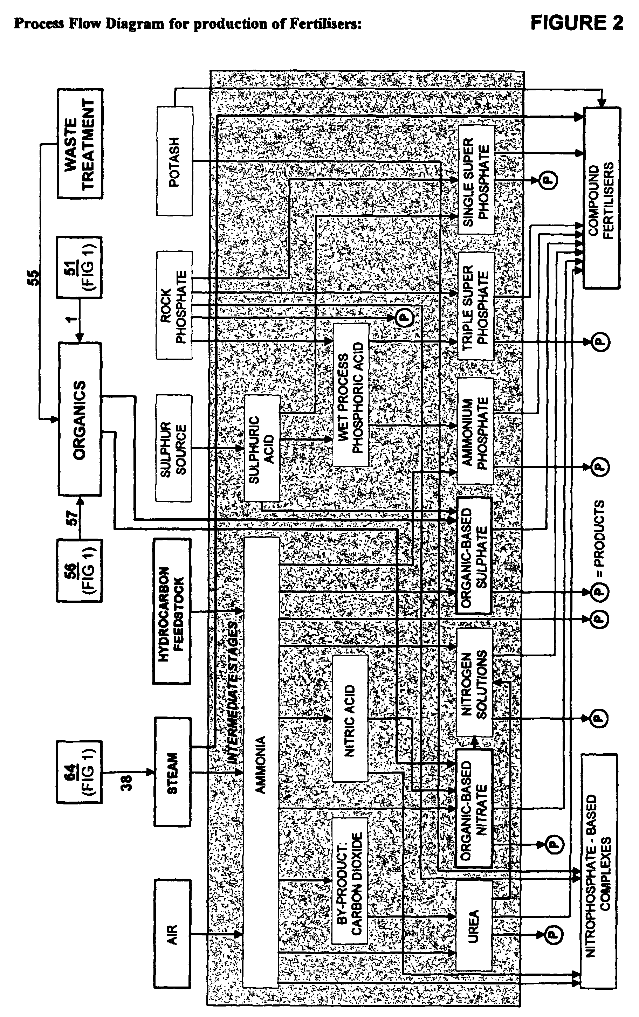

FIGURE 1 indicates the variable process links which are considered, linking the inventive process to the production of a range of products as indicated in FIGURE 2. The outline of these link stages is summarised as follows.

Waste material **50** with an organic content such as MSW, is fed to a separation process **51.** This separation process will normally consist of a combination of manual and automatic sorting methods. Many different forms of this process exist in the waste management industry at present Inert materials **52,** such as bricks, soil and stones, are separated and discarded to landfill. Metals **53,** such as aluminium and steel, are separated and recycled by different processes. Combustibles **54** can be fed to a thermal process for energy recovery.

The organic fraction 1 of the separated waste is the feedstock material for the inventive fertiliser production process. Equally, these organics can be fed to an anaerobic digester **56,** which produces digestate **57** and hydrocarbon gas **61.** The digestate can be fed to the thickener **12** of the inventive fertiliser process. Sewage sludge **55** may also form the feedstock for the anaerobic digester. Equally, the sewage sludge **55** can be the feed material for the thickener **12** of the main fertiliser process.

The hydrocarbon gas **61** produced is fed as before to a thermal oxidiser **62**, producing a hot off-gas **63** which feeds the waste heat boiler **64.** The steam **38** produced is used in the dryer **37** and for power generation for use in the process.
Conventional chemical compound fertilisers are produced by mixing together several chemical compounds in their dry state. There is no chemical reaction between the constituent compounds. The basic compounds provide the required levels of Nitrogen, Phosphorous and Potassium, to which is added a mineral filler such as Talcum or Grit.

In the production of organically enriched and bound compound fertilisers, the entire mixing and balancing process takes place in the medium of the organic slurry. The balance of Nitrogen, Phosphorous and Potassium in the final product is controlled by the amounts of acid, Ammonia, Phosphate compound and Potassium compound which is added to the slurry medium. The compound fertiliser is formed by the chemical reaction of the constituent elements in the slurry medium.

Additional trace elements can be added to the slurry as required for specific applications. These can include: Boron, Calcium, Copper, Iron, Magnesium, Manganese, Molybdenum, Sulphur, Zinc or other trace elements. The organic fraction of the invention product will contain some trace elements depending on the source of the feedstock.

The filler used in conventional blended chemical fertiliser processes is replaced in its entirety by the organic fraction, which forms an integral part of the new fertiliser product.

The acids used for the process can include Sulphuric, Nitric, Phosphoric or Hydrochloric acid, among others.

Nitrogen can be provided by an Ammonium source such as Ammonia, Ammonium Nitrate, Ammonium Phosphate or Potassium Nitrate. If Nitric acid is used, this will also affect the final Nitrogen level attained.

Phosphorous can be provided by the addition of pure Phosphate, Ammonium Phosphate, Rock or Super Phosphates or Phosphoric Acid.

Potassium can be provided by the addition of Potash, Muriate of Potash, Potassium Nitrate or Sulphate of Potash.

The variation of chemical reactants and nutrients added can be varied greatly and is not limited to the use of only those ingredients listed above. The organic content of the final product can also be varied between approximately 15% and 85% depending on the formulation required for the final product.

### OUTLINE DESCRIPTION OF THE INVENTION PROCESS

### Initial Mixing

The organic material, shredded if required, and water are mixed together in a mixer to produce a slurry with approximately 90% water content. The feedstock can include carbon residue from a pyrolysis system, which can form part of the process if required.

### Tramp Removal

The slurry produced is passed over a screen mesh. Small pieces of plastic, metals, timber or other particles suspended in the slurry are removed. The slurry passing through the screen mesh is virtually free of unwanted inorganic contaminants.

### Anaerobic or Aerobic Digestion Digestate

The digestate from the anaerobic digestion, or from the aerobic digestion of organic waste or sewage sludge can be used as the feed organic material to the following stages of the process.

### Thickening

The water content of the slurry is reduced to between 55% and 80% with the dry solids content depending on the chemical mix of the final product. The water removed is pumped to a settling tank to remove fines and grit. The water removed is then recycled to the initial mixing stage.

### Initial Reaction

Acid is added to sterilise the thickened paste, and Ammonia is added to neutralise the acid and provide the required Nitrogen content in the final fertiliser product.

### Nutrient Addition

Phosphate and Potassium compounds can be added to the mixture to provide the required P₂O₅ and K₂O content in the final fertiliser product.

### Granulation

The fertiliser paste is formed into granules.

### Drying

The granules are dried using high temperature steam to reduce the moisture content of the product Wet air from the drier is scrubbed to remove dust. The dust is returned to the granulator to aid granulation.

### Screening

The product is screened to produce final product and rejects. Rejects are ground to a fine dust in a mill and added to the granulator to aid granulation.

### SPECIFIC DESCRIPTION OF THE INVENTION PROCESS

### Introduction

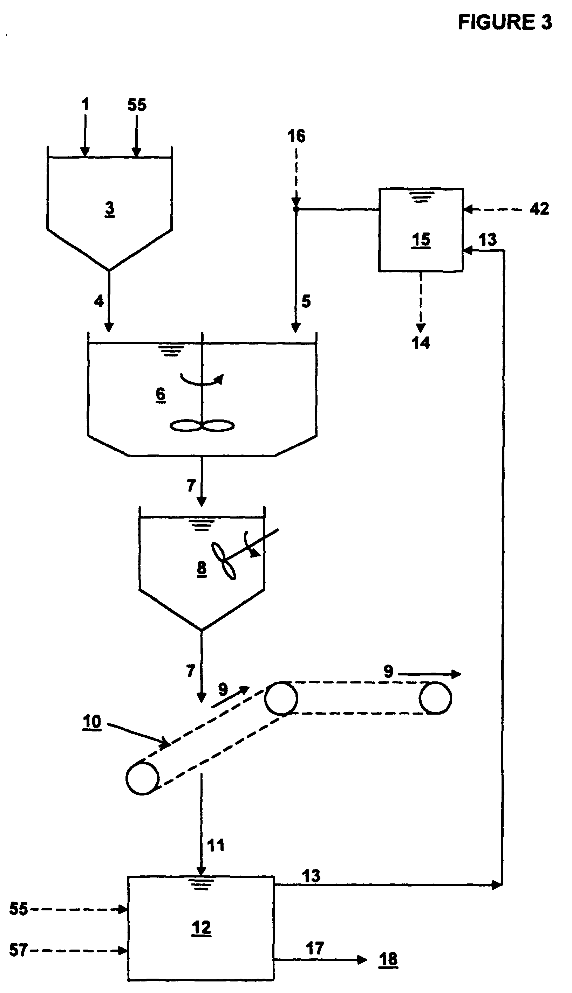

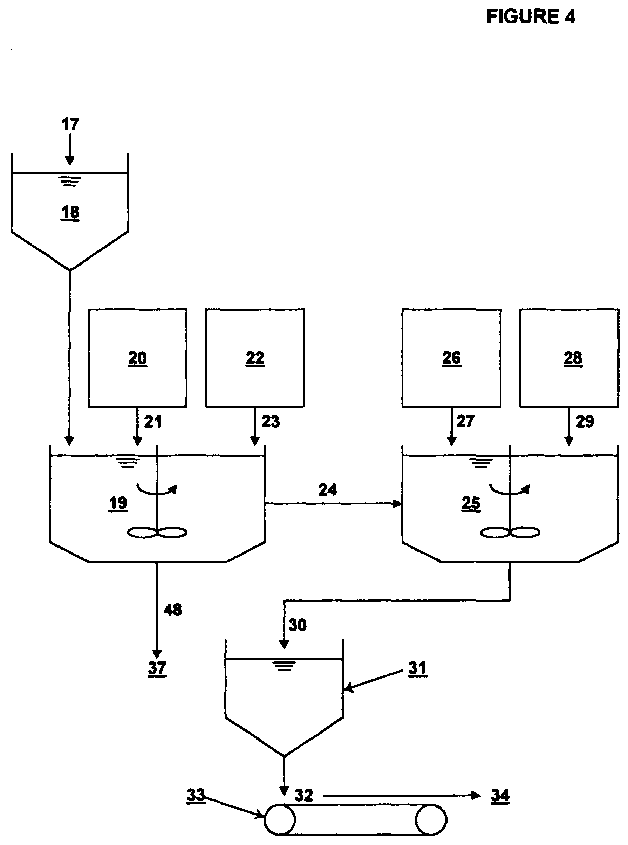

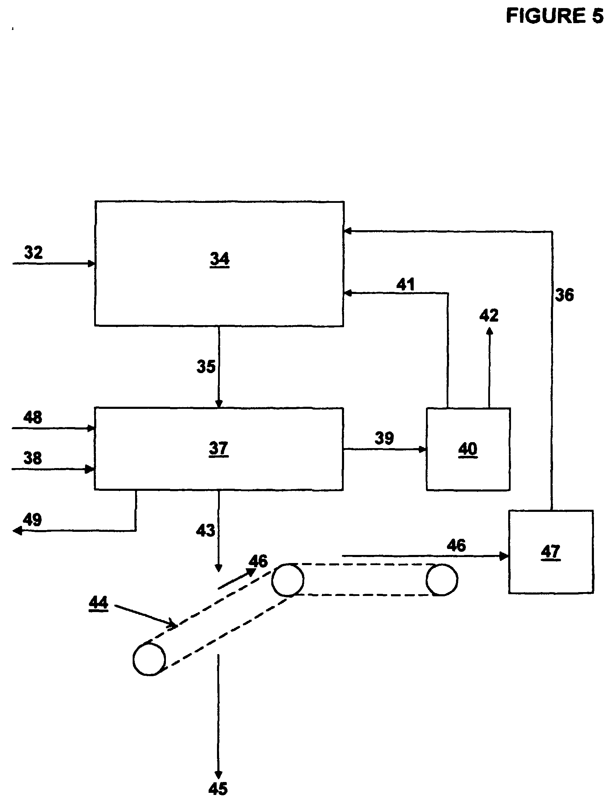

The following process description is for a specific fertiliser product using specific ingredients and specific equipment. These include alternative feed materials, additives and process steps. The process can change as each variable changes, so the number of different combinations is infinite. The process has been modelled on computer allowing the different process variations to be examined. The following specific process description is for a single batch of a single set of variables, which can be produced at a rate of 10 batches per hour. The process flow diagram for this particular combination of variables is shown in FIGURES 3, 4and 5.
FIGURE 3 shows the process stages which include shredding, liquefaction, tramp removal and thickening of the organic paste.
FIGURE 4 shows the sterilisation, chemical and nutrient addition stages of the process.
FIGURE 5 shows the granulation and screening stages to produce the final product.

### Initial mixing and tramp removal

Where MSW is the source of the organic material **1,** the waste stream **50** may be screened **51** by a variety of conventional methods to remove non-organic or unwanted elements, such as plastics, metals, textiles, paper, timber, inert materials, etc. to achieve the organic fraction **1.** The removed materials can be separated into inert materials **52** which are discarded to landfill, metals **53** which can be recycled and recovered, and combustibles **54** which can be utilised to generate feedstock materials for other process stages. The organic material has been shredded to achieve a maximum size of 50mm. This shredded material is passed to a storage hopper **3** which is used to feed the mixer **6** where water **5** from the storage tank **15** is added to the mixture and agitated to produce an aqueous slurr**y 7** containing of the order of 90% water. Additional water can be supplied from a mains supply **16** if required.

The aqueous slurry is fed from the mixer to a surge tank **8** which enables the following stages of the process to be carried out as a continuous or a batch process.

The purpose of this initial mixing is to create a slurry which enables tramp material **9** to be easily removed. The organic slurry may contain contaminants in the form of metal, plastic, timber or other particles. This tramp material is removed by passing the slurry over screen mesh **10** which allows passage of the suspended organic slurry only **11,** and oversized or contaminant material is screened out **9**. The resulting slurry **11** is now virtually free from inorganic contaminants which would not be acceptable in the end product.

A 7m³ pan mixer **6** is fed with 1.7 tonnes of organic material **4** under gravity from a 7m³ hopper **3.** Simultaneously 4.81 tonnes of water **5** is fed into the mixer. The time taken to fill the mixer is 30 seconds. The MSW organics and water are mixed for 5 minutes to produce a slurry with 90% water content. On completion of the mixing cycle the slurry is emptied **7** from the mixer into a 7m³ surge tank **8** which is fitted with stirrers to prevent the solids settling out.

### Tramp Removal

The purpose of this stage is to ensure that no unwanted contaminant material (tramp) **9**, in the form of plastic, metals, timber, textiles etc. are carried through to the fertiliser production phase. The slurry is pumped from the surge tank flat **8** a constant rate of 21 l/sec over a screen **10** fitted with a 10mm mesh. The screen mesh removes 34kg of oversize tramp material which is conveyed away **9,** for disposal to landfill. The remaining 6.46 tonnes of organic slurry **11** passes through the screen mesh and is pumped at a constant rate of 21 l/sec to the thickener **12.**

### Thickening

The purpose of the thickener is to remove excess water **13** and control the moisture content of the material to be produced for granulating. The thickener removes 4.6 tonnes of water **13** from the organic slurry, and this is pumped to a settling tank **15** for grit removal, with the removed grit **14** being disposed of to landfill. The water content of the organic paste **17** which is removed from the thickener has been reduced to 66%, and 1.91 tonnes of this organic paste is conveyed from the thickener to a surge hopper **18** at a constant rate of 21m³ per hour. [Note that the organic digestate **57** from an anaerobic digestion plant can equally be used as the feedstock for the thickening process as screening of this material will have occurred as part of the anaerobic digestion process. Sewage sludge **55** which has not been treated by anaerobic digestion is equally suitable as a feed material at this stage, where the water content of the slurry is similarly reduced to a level of 66%.]

### Initial Reaction

The purpose of the initial reaction is to provide the Nitrogen content of the fertiliser. The addition of acid and ammonia create heat so that the material reaches 55-85 deg C. This temperature rise and the change in pH has the effect of sterilising (by pasteurising) the material, thereby making it sterile and free fom any harmful microbial organisms, weed seeds or pathogens. 1.91 tonnes of the organic paste **17** is gravity fed from the surge hopper **18** to a 3m³ pan mixer **19.** 229kg of Sulphuric Acid **21** is fed at a constant rate of 4.15 l/sec over a 30 second period from a storage tank **20** to the mixer and mixed for 1 minute, which causes the temperature of the mixture to rise to 55 deg C. The pH of the mixture is rapidly reduced to an acidic state. The addition of 224kg of Ammonia **23** at a constant rate of 8.46 l/sec over a 30 second period from the storage tank **22** follows, which causes the temperature of the mixture to rise to 85 deg C during a further mixing period of 1 minute. The pH of the mixture rises rapidly, and the sudden change in pH to near neutral or slightly acidic, in conjunction with the temperature rise, is instrumental in sterilising the mixture.

### Compost Production

The sterilised paste **48** can be diverted at this stage of the process to the dryer **37.** The resulting product **49** is a nitrogen-rich compost-like material which can be marketed. This product is unlike conventional compost which is not a sterile material, has a low nitrogen level and takes of the order of 60 days to produce under conventional aerobic bacterial activation techniques. The sterile and nitrogen-rich compost is produced in a time frame of some 30 minutes for the overall process.

### Nutrient Addition

The purpose of the nutrient addition is to provide the P₂O₅, and K₂O content of the fertiliser. The treated mixture **24** is fed to a 7m³ pan mixer **25.** 209kg of Rock Phosphate **27** is fed from the storage hopper **26** over a 30 second period. Simultaneously 105kg of Muriate of Potash **29** is fed to the mixer from the storage hopper **28.** Mixing continues for a further 30 seconds. After the addition of the nutrients the wet fertiliser **30** is fed to a 7m³ surge hopper **31.**

### Granulation

The purpose of granulation is to form 1-4mm granules of fertiliser. The wet fertiliser **32** is fed to the granulating table **34** at a constant rate by the conveyor **33.** During granulation 602kg of ground oversize and undersize fertiliser **36** is added to the mixture which aids granulation. This reduces the water content from 55% to 45% which is the optimum level for the formation of 1-4mm granules. The newly formed granules **35** are fed at a constant rate of 32.57 tph to the dryer **37.**

### Drying

The purpose of drying is to reduce the moisture content of the granules and make them more robust and easier to handle. The 32.57 tph of the wet fertiliser **35** are conveyed to the dryer **37,** and 14.41 tph of steam **38** at 10bar and 180 deg C is added to dry the material. The moisture content of the material is reduced from 45% to 8% in the dryer, and 13.1 tph of water is driven from the material. This water **39** is fed to a scrubber **40** where dust **41** is removed, and returned to the granulator **34** to aid granulation. The cleaned water **42** is returned to the water storage tank **15** for re-use in the process. 19.47 tph of dry granules **43** are fed from the dryer at a constant rate.

### Screening

The dry granules **43** are fed onto a vibrating double deck screen **44** fitted with 4mm and 1mm meshes. 13.66 tph of middlings are taken off as product **45.** 5.81 tph of oversize and undersize granules **46** are taken off and conveyed to a mill **47,** milled to dust 36 and returned to be added to the granulator **34** to aid granulation.

### Product

The final product **45** can be stored in silos or bagged as required. The dry granules comprise an organic matrix which binds the chemical nutrients of the fertiliser together. As a sterile material, it is not subject to degradation by microbial action during storage. The fertiliser promotes growth of soil borne microbes when it is spread, thereby releasing the nutrients to the soil and promoting beneficial microbial growth, such as nitrogen-fixing strains which aid plant growth. As the granules are not soluble, there is reduced leaching of the chemicals from the soil, thereby providing a slow release mechanism for the chemical nutrients.

The fertiliser produced contains trace amounts of elements such as copper, sulphur, zinc, manganese, magnesium and boron which are present in the organics, and these add benefit to the efficacy of the fertiliser. These trace elements can be enhanced at the nutrient addition stage of the process. Conventional chemical fertilisers do not generally contain similar trace elements which result from their manufacture process. The levels of trace elements contained in the product of the inventive process has been shown by test to be below the safe limits set for the industry.

The organic fraction of the product **45** produced by the particular example listed is approximately 50%, with the remaining 50% comprising the N:P:K ratio. The organic constituent percentage of the product can be varied between approximately 15% and 85%. The Nitrogen, Phosphorous and Potassium constituent percentages can equally be manipulated to give a wide range of values. For example, the percentage of Nitrogen in the final product can be raised to approximately 25% by reducing the organic percentage to approximately 30%.

## Claims

1. A method for producing matrix-bound organically enriched chemical fertilisers from any putrescible organic material, said method comprising:
a) the liquefaction by the addition of water of the organic feedstock material to a moisture content of approximately 90%
b) the screening/filtering of the liquefied feedstock to remove unwanted tramp material
c) the thickening of the screened feedstock to moisture content of 55-80% to provide the medium for subsequent chemical reactions and sterilisation of the mixture
d) the addition of an inorganic acid to lower the pH and raise the temperature of the mixture
e) the addition of ammonia to raise the pH and further raise the temperature of the mixture
f) the sterilisation of the organic feedstock of harmful micro-organisms and pathogens by the rapid change in pH and elevation in temperature of the mixture as a result of the addition of the acid followed by the base
g) the addition of phosphorous and potassium as chemical compounds or elements for the formation of compound fertiliser paste
h) the granulation, screening, and milling of reject product and re-use of the milled powder to aid granulation
i) the drying of the fertiliser granules by the use of steam

2. A method for the production of a nitrogen-rich sterile compost-like product said method comprising:
a) steps as 1(a) to 1(f) in Claim 1
b) followed by step 1(h)and 1(i) in Claim 1 to produce the final product

3. A method for producing matrix-bound organically enriched chemical fertilisers, said method comprising:
a) organic feedstock comprising the digestate output from an anaerobic digestion process, or raw sewage sludge, is introduced at step 1(c) in Claim 1 above, and subjected to treatment as detailed in steps 1(d) to 1(i) to produce the final product, the off-gas from the Anaerobic process being used to generate the electricity and heat required to manufacture the product

4. The method of Claim 1 wherein the organic feedstock is the organic fraction of MSW.

5. The method of Claim 1 as in step 1(b) wherein unwanted tramp material is removed from the mixture by the liquefaction and screening/filtering of the mixture.

6. The method of Claim 1 wherein the nitrogen content of the liquefied and thickened organic material is increased by the addition of an acid and base as in steps 1(d) and 1(e).

7. The method of Claim 1 as in step 1(g) wherein the addition of chemical nutrients to the liquefied, thickened and sterilised organic material produces a matrix-bound organically enriched fertiliser paste.

8. The product resulting from Claim 1.

9. The product resulting from Claim 2.

10. The product resulting from Claim 3.

11. The product resulting from Claim 4.
